(19) Europäisches Patentamt
European Patent Office
Office européen des brevets

(11) **EP 3 208 067 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(21) Anmeldenummer: **17154101.4**

(22) Anmeldetag: **01.02.2017**

(51) Int Cl.:
*B29C 47/92* (2006.01)     *B29C 47/34* (2006.01)
*B29C 47/88* (2006.01)     *G01B 5/06* (2006.01)
*B29C 47/00* (2006.01)

(54) **GUMMISTRANG-HERSTELLANLAGE MIT DICKENMESSVORRICHTUNG**

RUBBER STRAND PRODUCTION INSTALLATION WITH THICKNESS MEASURING DEVICE

INSTALLATION DE FABRICATION DE FIL DE CAOUTCHOUC AVEC DISPOSITIF POUR LA MESURE DE SON ÉPAISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2016 DE 102016102694**

(43) Veröffentlichungstag der Anmeldung:
**23.08.2017 Patentblatt 2017/34**

(73) Patentinhaber: **KraussMaffei Berstorff GmbH**
**30625 Hannover (DE)**

(72) Erfinder: **Rupprecht, Marko**
**31191 Algermissen (DE)**

(74) Vertreter: **Roider, Stephan**
**KraussMaffei Group GmbH**
**- Patentabteilung TS -**
**Krauss-Maffei-Str. 2**
**80997 München (DE)**

(56) Entgegenhaltungen:
**DE-U1- 8 810 470       DE-U1- 20 103 680**
**JP-A- 2002 166 419    US-A- 2 566 854**
**US-A- 3 892 043**

**Beschreibung**

Die Erfindung betrifft eine Gummistrang-Herstellanlage mit (a) einer Gummistrang-Herstellvorrichtung zum Herstellen eines Gummistrangs und (b) einer Dickenerfassungsvorrichtung zum Messen einer Strangdicke des Gummistrangs. Derartige Gummistrang-Herstellanlagen werden beispielsweise in Reifenfabriken zur Herstellung von Reifen verwendet. Insbesondere beim Anfahren einer solchen Gummistrang-Herstellanlage muss bekannt sein, ob der Gummistrang eine vorgegebene Stelle bereits passiert hat. Bekannte Gummistrang-Herstellanlagen besitzen dazu eine oder mehrere Lichtschranken.

Gummmistrang-Herstellanlagen mit Dickenerfassungen sind z. B. in der US 2,566,854 oder der US 3,892,043 offenbart. Nachteilig am Stand der Technik ist, dass die Erfassung des Strangs wenig prozesssicher ist. Das gilt insbesondere dann, wenn die Strangdicke gering ist und beispielsweise weniger als 3 mm beträgt. Der Erfindung liegt die Aufgabe zugrunde, die Erfassung des Strangs zu verbessern.

Die Erfindung löst das Problem durch eine gattungsgemäße Gummistrang-Herstellanlage, bei der die Dickenerfassungsvorrichtung einen Messarm aufweist, der schwenkbar angeordnet (oder befestigt) ist und dessen Schwenkwinkel sich in Abhängigkeit von der Strangdicke ändert.

Vorteilhaft daran ist, dass diese Dickenerfassungsvorrichtung besonders robust ist. So wird der Schwenkwinkel erfindungsgemäß mittels eines Winkelsensors gemessen, wobei ein derartiger Winkelsensor wenig empfindlich auf eine feuchte- oder tropfenhaltige Atmosphäre in seiner Umgebung reagiert. Da die Dickenerfassungsvorrichtung vorzugsweise in einer Kühlstrecke angeordnet ist, kann es dort zu Kondenswasser- oder Nebelbildung kommen. Die Atmosphäre in der Umgebung der Dickenerfassungsvorrichtung kann zudem sauer und/oder biozidhaltig sein. Es hat sich herausgestellt, dass eine Dickenerfassungsvorrichtung mit einem Messarm auch bei den genannten Umgebungsbedingungen prozesssicher funktioniert.

Vorteilhaft ist zudem, dass die Strangdicke mit einer hohen Sicherheit bestimmt werden kann. Wird eine Lichtschranke verwendet, so können Wassertropfen und/oder Wassernebel die Messung verfälschen. Zwar ist es möglich, über den Lichtschranken Schutzdächer anzubringen, es kann aber dennoch zu Fehlauslösungen kommen. Zudem bedeuten die Schutzdächer einen zusätzlichen konstruktiven Aufwand und können, wenngleich nur in sehr geringem Maße, die Funktionsweise der Gummistrang-Herstellanlage beeinträchtigen.

Die Dickenerfassungsvorrichtung kann zudem so angeordnet werden, dass auch unerwartete Betriebszustände ihre Funktionsfähigkeit nicht beeinflussen. Wird beispielsweise eine Lichtschranke verwendet, so muss diese in einem sehr kleinen Abstand über dem Strang montiert werden, was aufwändig ist. Die Dickenerfassungsvorrichtung gemäß der Erfindung ist hingegen einfach zu montieren und zu justieren.

Ein weiterer Vorteil ist es, dass Gummi-Stränge mit einer kleinen Strangdicke sicher erkannt werden können. Vorzugsweise ist der Messarm an seinem freien Ende mit einer Rolle versehen. Die Dimension kann für den Material-Dickenbereich optimiert werden.

Auch ist es vorteilhaft, dass eine derartige Dickenerfassungsvorrichtung tolerant ist gegenüber starken Schwankungen der Strangdicke. Wird die Gummistrang-Herstellanlage neu angefahren, so wird das vordere Ende des Gummistrangs häufig umgebogen, um das Anfahren zu erleichtern. Da der Messarm so lang gebaut werden kann, dass sie durch Hochklappen einer solchen Wulst ausweichen kann, kann es nicht zu einer Zerstörung des Arms kommen. Der eingestellte Grenzwert verhindert die Zerstörung der Anlage oder von Anlageteilen.

Im Rahmen der vorliegenden Beschreibung wird unter einer Gummistrang-Herstellvorrichtung insbesondere eine Vorrichtung verstanden, die zum Herstellen des Gummistrangs aus einem ungeformten Gummi-Material ausgebildet ist. Vorzugsweise umfasst die Gummistrang-Herstellvorrichtung einen Extruder.

Unter der Dickenerfassungsvorrichtung wird eine Vorrichtung verstanden, mittels der feststellbar ist, ob ein Gummistrang an einer vorgegebenen Stelle, nämlich der Messstelle, vorhanden ist oder nicht. Es ist möglich und stellt eine bevorzugte Ausführungsform dar, dass die Dickenerfassungsvorrichtung eine Dickenmessvorrichtung ist, mittels der die Strangdicke gemessen werden kann. Dabei wird insbesondere auch eine solche Vorrichtung als Dickenmessvorrichtung betrachtet, die eine Aussage erlaubt, ob die Strangdicke in einem von zwei, drei oder mehr Strangdicken-Intervallen liegt.

Unter dem Merkmal, dass die Strangdicke erfasst wird, wird also insbesondere verstanden, dass festgestellt wird, ob die Strangdicke einen vorgegebenen Wert, insbesondere null, überschreitet. Vorzugsweise ist das Erfassen ein Messen.

Der Schwenkwinkel ist im Intervall von 0° bis 90° definiert.

Erfindungsgemäß besitzt die Gummistrang-Herstellanlage eine Fördervorrichtung, insbesondere ein Förderband, zum Fördern des Gummistrangs und einen Schwenkwinkel-Sensor. Erfindungsgemäß ist der Messarm um eine Drehachse drehbar gelagert. Der kürzeste Abstand zwischen der Drehachse oder dem Drehpunkt des Messarms und der Fördervorrichtung, z.B. einer Oberfläche der Fördervorrichtung oder des Förderbands, entspricht im Wesentlichen einer Länge des Messarmes Der Schwenkwinkel-Sensor kann ausgebildet sein zum Messen des Schwenkwinkels, beispielsweise in Form einer Winkelabweichung von der kürzesten Verbindungslinie zwischen der Drehachse oder dem Drehpunkt und der Fördervorrichtung, wobei der Schwenkwinkel umso größer ist, je größer die Strangdicke des Gummistrangs ist.

Günstig ist es, wenn die Drehachse oder der Drehpunkt so angeordnet ist, dass der Schwenkwinkel dann, wenn kein Gummistrang auf der Fördervorrichtung liegt zumindest 0°, insbesondere zumindest 1°, beträgt. Idealerweise ist der Schwenkwinkel dann 0°. Günstig ist es, wenn der Schwenkwinkel dann kleiner ist als ein Auslösewinkel eines Schwenkwinkel-Sensors, also des Schwenkwinkels, der zu der kleinsten messbaren Strangdicke gehört. Vorzugsweise kann die Drehachse oder der Drehpunkt so angeordnet sein, dass der Schwenkwinkel, wenn kein Gummistrang auf der Fördervorrichtung liegt, höchstens 20°, insbesondere höchstens 10°, bevorzugt höchstens 5°, beträgt.

Das hat den Vorteil, dass ein Gummistrang mit seiner Vorderseite beim Einlaufen den Messarm stets wegdrückt und es so zu keinen Verklemmen kommen kann. Ist der Gummistrang außergewöhnlich dick, so führt dies nur dazu, dass sich der Schwenkwinkel stark vergrößert. In der Ausgangsstellung oder Ruhestellung des Messarms, d.h., die Stellung, in der der Messarm nicht durch einen Gummistrang ausgelenkt wird, kann der Schwenkwinkel auch mit 0° definiert werden (sog. Null- oder Ausgangsposition).

Gemäß einer bevorzugten Ausführungsform ist die Gummistrang-Herstellvorrichtung eingerichtet zum Herstellen eines Gummistrangs mit einer vorgegebenen Strangdicke, wobei ein Abstand der Drehachse oder des Drehpunkts von einer Oberfläche der Fördervorrichtung zumindest das Dreifache, insbesondere zumindest das Fünffache, der Strangdicke beträgt. Auf diese Weise ist sichergestellt, dass die Dickenerfassungsvorrichtung auch bei Schwankungen der Strangdicke zuverlässig funktioniert. Beispielsweise besitzt die Gummistrang-Herstellvorrichtung eine Formdüse, deren Öffnung eine Höhe von höchstens einem Fünftel dieses Abstands hat.

Vorzugweise ist die Länge des Messarms so gewählt und die Drehachse so angeordnet, dass der Schwenkwinkel bei einer Strangdicke von 2 mm zumindest 5°, insbesondere zumindest 7°, beträgt. Es existieren robuste Winkelmesser, die Winkeländerungen von einem halben Grad sicher messen können. Durch diese Anordnung ist daher sichergestellt, dass die Strangdicke mit einer hohen Genauigkeit gemessen werden kann.

Vorzugsweise ist der Messarm an seinem freien Ende mit einer material schonenden Kontaktfläche versehen. Beispielsweise besitzt das freie Ende eine Rolle oder Walze, deren Radius vorzugsweise größer ist als die Soll-Strangdicke, damit der Materialangriffspunkt idealerweise immer unterhalb der Rollenmitte liegt. Vorzugsweise ist der Krümmungsradius größer als 1 Millimeter, insbesondere größer als 2 Millimeter. Das freie Ende ist das Ende des Messarms, das beim Betrieb mit dem Gummistrang in Kontakt steht. Durch die Ausführung wird eine materialschonende Auflage des freien Endes auf dem Gummistrang erreicht.

Alternativ weist der Messarm an seinem freien Ende eine oder mehrere Bürsten, mehrere Scheiben, eine Düse (oder auch einzelne Düsen), die ein Luftpolster über die gesamte Breite erzeugt, das das Gewicht der Vorrichtung ausgleicht, oder eine Wassersprühvorrichtung (oder auch einzelne Düsen) auf, deren Druck auf das Material das Gewicht der Vorrichtung ausgleicht.

Der Messarm oder der Drehpunkt kann oberhalb oder unterhalb der Fördervorrichtung, insbesondere eines Förderbandes, angeordnet sein. Der Messarm oder der Drehpunkt kann daher über der Fördereinrichtung oder dem Förderband angeordnet sein. Der Messarm kann ferner in einer im Wesentlichen vertikalen Richtung zur Fördervorrichtung, zum Förderband oder zur Förderrichtung angeordnet sein. In einer Ausgestaltung kann der Messarm über der Fördereinrichtung oder dem Förderband in einem Winkel zwischen 45° bis 90°, bezogen auf die Fördervorrichtung oder eine Förderrichtung, angeordnet sein. Dieser Winkel kann im Wesentlichen 70°, 80° oder 90° betragen.

Alternativ kann der Messarm die Fördervorrichtung bzw. das Förderband seitlich umgreifen oder in diese seitlich eingreifen. In einer Ausgestaltung kann der Messarm als I-, L- oder U-förmiger Arm ausgebildet sein. Eine erfindungsgemäße Gummistrang-Herstellanlage weist vorzugsweise eine Kühlstrecke auf, die eine erste Teilstrecke, die eine erste Fördervorrichtung und eine erste Kühlvorrichtung aufweist, und eine zweite Teilstrecke, die eine zweite Fördervorrichtung und eine zweite Kühlvorrichtung aufweist, besitzt, wobei der Messarm in der Kühlstrecke angeordnet ist. In anderen Worten ist der Messarm auf der ersten Teilstrecke, auf der zweiten Teilstrecke oder zwischen der ersten und der zweiten Teilstrecke angeordnet. In diesem Fall kann die Atmosphäre in der Umgebung der Dickenerfassungsvorrichtung tröpfchenhaltig sein und es kann zu Kondenswasserbildung kommen, was bei herkömmlichen Dickenerfassungsvorrichtungen zu Messfehlern führen kann, nicht aber bei der erfindungsgemäßen Lösung.

Vorzugsweise besitzt die Gummistrang-Herstellanlage einen sogenannten Tänzer, der zwischen der ersten Teilstrecke und der zweiten Teilstrecke angeordnet ist. Günstig ist es zudem, wenn die zweite Fördervorrichtung zum Fördern mit einer von der ersten Fördergeschwindigkeit der ersten Fördervorrichtung verschiedenen zweiten Fördergeschwindigkeit ausgebildet ist. Auf diese Weise kann ein Schrumpfen des abkühlenden Gummistrangs erreicht werden.

Vorzugweise hat die Gummistrang-Herstellanlage dazu eine Auswerteeinheit, die die zweite Fördergeschwindigkeit anhand der Position des Tänzers und der ersten Fördergeschwindigkeit steuert oder regelt. Um eine derartige Anlage anzufahren, ist es besonders wichtig, den Zeitpunkt zu kennen, zu dem der Gummistrang die Position der Dickenerfassungsvorrichtung passiert hat. Das ist mit der beschriebenen Dickenerfassungsvorrichtung im Rahmen der Erfindung besonders einfach und prozesssicher möglich.

Vorzugsweise ist die Auswerteeinheit eingerichtet zum automatischen Messen des Schwenkwinkels und zum Berechnen der Strangdicke aus dem Schwenkwinkel oder einer Winkelabweichung.

Günstig ist es, wenn die Gummistrang-Herstellvorrichtung zum Herstellen eines Gummistrangs mit einer vorgegebenen Strangbreite ausgebildet ist. Der Messarm kann als I-, L- oder U-förmiger Arm oder als Messklappe ausgebildet sein. Die Messklappe kann eine Messklappenbreite aufweisen, die zumindest einem Viertel, einem Drittel oder der Hälfte der Strangbreite entspricht. Besonders bevorzugt ist die Messklappenbreite zumindest so groß wie die Strangbreite. Das gewährleistet eine hohe Messgenauigkeit und Robustheit.

Vorzugsweise ist die Fördervorrichtung zumindest teilweise von einem Gehäuse umgeben, wobei der Messarm mit einer Welle so verbunden ist, dass sich diese Welle dreht, wenn sich der Schwenkwinkel α ändert. Diese Welle ist vorzugsweise aus dem Gehäuse herausgeführt, sodass der Schwenkwinkel von außerhalb des Gehäuses gemessen werden kann. Das hat den Vorteil, dass der Schwenkwinkel-Sensor weniger robust ausgebildet sein kann und leichter zu warten ist.

Gemäß einer bevorzugten Ausführungsform besitzt die Gummistrang-Herstellanlage eine Abblasvorrichtung, die angeordnet ist zum Abblasen von Wassertropfen in einem Abblasbereich auf dem Gummistrang, wobei die Abblasvorrichtung zumindest eine Abblasdüse und eine Höhenverstellvorrichtung aufweist, wobei der Messarm angeordnet ist zum Messen der Strangdicke des Gummistrangs im Abblasbereich und wobei die Höhenverstellvorrichtung eingerichtet ist zum automatischen Anpassen einer Position der zumindest einen Abblasdüse an die Strangdicke. Wassertropfen auf dem Gummistrang sollten vermieden werden. Die Effizienz der Abblasvorrichtung hängt auch von dem Abstand der Abblasdüsen vom Gummistrang ab. Dadurch, dass mittels des Messarms die Strangdicke leicht gemessen werden kann, kann der Abstand der Abblasdüse vom Gummistrang an die Strangdicke angepasst werden, sodass die Effizienz optimierbar ist.

Die Erfindung wird im Folgenden anhand der beigefügten Zeichnung näher erläutert. Dabei zeigt

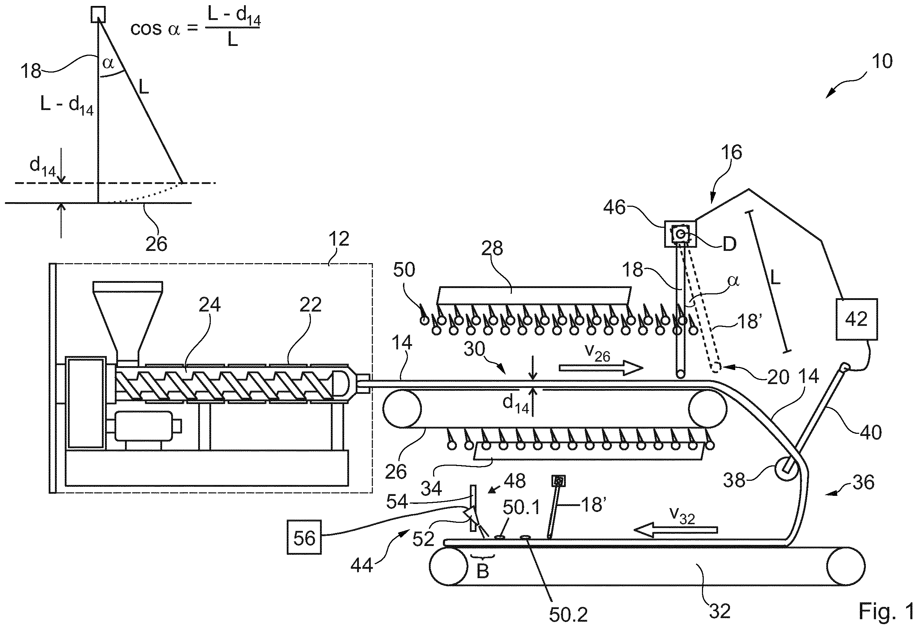

Figur 1    eine erfindungsgemäße Gummistrang-Herstellanlage.

Figur 1 zeigt eine erfindungsgemäße Gummistrang-Herstellanlage 10, die eine Gummistrang-Herstellvorrichtung 12 zum Herstellen eines Gummistrangs 14 und eine Dickenerfassungsvorrichtung 16 besitzt. Die Dickenerfassungsvorrichtung 16 weist einen Messarm 18 auf, der in einer Drehachse D schwenkbar angeordnet, befestigt oder gelagert ist. Der Messarm 18 hat eine Länge L, die von der Drehachse D bis zu einem freien Ende 20 gemessen wird. In der vorliegenden Ausgestaltung ist der Messarm 18 im Wesentlichen I-förmig ausgebildet. Alternativ kann der Messarm als Messklappe ausgebildet sein. Ein Schwenkwinkel α des Messarms 18 ändert sich in Abhängigkeit von einer Strangdicke $d_{14}$ des Gummistrangs 14. Der Messarm 18 ist materialschonend ausgeführt. Beispielsweise kann das freie Ende 20 verrundet sein oder eine Rolle aufweisen. Beispielsweise beträgt ein Krümmungsradius R 1 Millimeter oder mehr.

Die Gummistrang-Herstellvorrichtung 12 umfasst einen Extruder 22, der Gummi 24 zum Gummistrang 14 spritzt. Der Gummistrang 14 wird von einer ersten Fördervorrichtung 26 gefördert und dabei mittels einer ersten Kühlvorrichtung 28 gekühlt. Zur Verdeutlichung sind schematisch Kondenswassertröpfchen 50 eingezeichnet. Am Ende der ersten Fördervorrichtung 26 endet eine erste Teilstrecke 30 und der Gummistrang 14 bewegt sich ununterstützt, bis er von einer zweiten Fördervorrichtung 32 aufgenommen wird. Die zweite Fördervorrichtung 32 bewegt den Gummistrang 14 an einer zweiten Kühlvorrichtung 34 vorbei. Es ist möglich, nicht aber notwendig, dass die beiden Kühlvorrichtungen 28, 34 von dem gleichen Kühlaggregat mit Kühlmedium versorgt werden.

Der Punkt, an dem der Gummistrang 14 mit der zweiten Fördervorrichtung 32 in Kontakt kommt, ist der Beginn einer zweiten Teilstrecke 36. Zwischen den Teilstrecken 30, 36 ist ein Tänzer 38 angeordnet, der auch als Tänzerrolle bezeichnet werden könnte. Dieser Tänzer 38 ist durch eine Rolle gebildet, die an einem freien Ende 38 eines Arms 40 oder zwei Armen befestigt ist. Die Position des Tänzers 38 wird gemessen und eine Auswerteeinheit 42 berechnet daraus und aus einer ersten Fördergeschwindigkeit $v_{26}$ der ersten Fördervorrichtung 26 eine zweite Fördergeschwindigkeit $v_{32}$ der zweiten Fördervorrichtung 32. Die erste Teilstrecke 30 und die zweite Teilstrecke 36 sind Teil einer Kühlstrecke 44, in der die Dickenerfassungsvorrichtung 16 angeordnet ist.

Im Teilbild oben links ist schematisch gezeigt, wie der Messarm 18 dann, wenn kein Gummistrang 14 auf der ersten Fördervorrichtung 26 liegt, einen sehr kleinen Schwenkwinkel α einnimmt. Im vorliegenden Fall gilt dann α ≈ 1°. In diesem Fall gilt für die Abhängigkeit des Schwenkwinkels α von der Länge L des Messarms 18 und der Strangdicke $d_{14}$ die Beziehung

$$\cos \alpha = \frac{L - d_{14}}{L} = 1 - \frac{d_{14}}{L}.$$

Der Schwenkwinkel α wird mittels eines Schwenkwinkel-Sensors 46 erfasst, der mit der Auswerteeinheit 42 verbunden ist. Die Auswerteeinheit 42 ermittelt anhand des Schwenkwinkels a, ob ein Gummistrang 14 auf der Fördervorrichtung 26 liegt. Gemäß einer verbesserten Ausführungsform ist die Auswerteeinheit 42 eingerichtet zum Berechnen der Strangdicke $d_{14}$ aus dem Schwenkwinkel a.

Es ist möglich und stellt eine bevorzugte Ausführungsform dar, dass die Auswerteeinheit 42 ausgebildet ist zum Erfassen, ob die Strangdicke $d_{14}$ oberhalb eines Warn-Schwellenwerts liegt. Auf diese Weise können beispielsweise Materialdopplungen im Gummistrang 14 erkannt werden.

Die erste Fördervorrichtung und die erste Kühlvorrichtung 28 sind von einem nicht eingezeichneten Gehäuse umgeben, wobei der Messarm 18 an einer Welle D gelagert ist, sodass sich die Welle D dreht, wenn sich der Schwenkwinkel $\alpha$ ändert. Diese Welle D ist in dieser bevorzugten Ausführungsform aus dem Gehäuse herausgeführt, sodass der Schwenkwinkel von außerhalb des Gehäuses gemessen werden kann. Der Schwenkwinkel-Sensor 46 ist mit der Welle D verbunden.

Die Gummistrang-Herstellanlage 10 weist eine Abblasvorrichtung 48 auf, die angeordnet ist zum Abblasen von Wassertropfen 50.1, 50.2, ... in einem Abblasbereich B auf dem Gummistrang 14. Die Abblasvorrichtung 48 besitzt zumindest eine Abblasdüse 52, in der Regel mehrere Abblasdüsen, und eine Höhenverstellvorrichtung 54 zum Verändern eines Abstands der Abblasdüse 52 vom Gummistrang 14.

Ein zweiter Messarm 18' ist in Materialflussrichtung vor der Abblasdüse 52 angeordnet zum Messen der Strangdicke $d_{14,B}$ des Gummistrangs 14 in einem Abblasbereich B. Die Höhenverstellvorrichtung 54 ist eingerichtet zum automatischen Anpassen einer Position der Abblasdüse 54 an die Strangdicke $d_{14,B}$. Nimmt die Strangdicke $d_{14,B}$ zu, fährt die Höhenverstellvorrichtung 54 die Abblasdüse 52 nach oben. Nimmt die Strangdicke $d_{14,B}$ ab, fährt die Höhenverstellvorrichtung 54 die Abblasdüse 52 nach unten. Neben der eingezeichneten Abblasdüse können weitere Abblasdüsen vorhanden sein, die beispielsweise den Gummistrang 14 von unten abblasen. Die Abblasdüse 54 wird von einer Druckluftquelle 56 mit Druckluft versorgt.

**Bezugszeichenliste**

10    Gummistrang-Herstellanlage
12    Gummistrang-Herstellvorrichtung
14    Gummistrang
16    Dickenerfassungsvorrichtung
18    Messarm
20    freies Ende
22    Extruder
24    Gummi
26    erste Fördervorrichtung
28    erste Kühlvorrichtung
30    erste Teilstrecke
32    zweite Fördervorrichtung
34    zweite Kühlvorrichtung
36    zweite Teilstrecke
38    Tänzer
40    Arm
42    Auswerteeinheit
44    Kühlstrecke
46    Schwenkwinkel-Sensor
48    Abblasvorrichtung
50    Wassertropfen
52    Abblasdüse
54    Höhenverstellvorrichtung

56    Druckluftquelle

$\alpha$    Schwenkwinkel
B    Abblasbereich
D    Drehachse/Welle
$d_{14}$    Strangdicke
L    Messarmlänge
$v_{26}$    erste Fördergeschwindigkeit
$v_{32}$    zweite Fördergeschwindigkeit

**Patentansprüche**

1.    Gummistrang-Herstellanlage (10) mit

(a) einer Gummistrang-Herstellvorrichtung (12) zum Herstellen eines Gummistrangs (14) und
(b) einer Fördervorrichtung (26), insbesondere einem Förderband, zum Fördern des Gummistrangs (14) und
(c) einer Dickenerfassungsvorrichtung (16) zum Erfassen einer Strangdicke (d14) des Gummistrangs (14), wobei die Dickenerfassungsvorrichtung (16) einen Messarm (18) aufweist, der schwenkbar angeordnet ist und dessen Schwenkwinkel ($\alpha$) sich in Abhängigkeit von der Strangdicke (d 14) ändert, **dadurch gekennzeichnet, dass**

die Dickenerfassungseinrichtung (16) einen Schwenkwinkel-Sensor (46) umfasst,
der Messarm (18) an einer Drehachse (D) drehbar gelagert ist und
der kürzeste Abstand zwischen der Drehachse (D) und der Fördervorrichtung im Wesentlichen einer Länge (L) des Messarmes (18) entspricht.

2.    Gummistrang-Herstellanlage (10) nach Anspruch 1, **dadurch gekennzeichnet, dass**

(a) der Schwenkwinkel (a) gemessen ist als Winkelabweichung von der kürzesten Verbindungslinie zwischen der Drehachse (D) und der Fördervorrichtung, wobei der Schwenkwinkel (a) umso größer ist, je größer die Strangdicke ($d_{14}$) des Gummistrangs (14) ist, und
(b) wobei die Drehachse (D) so angeordnet ist, dass der Schwenkwinkel ($\alpha$), wenn kein Gummistrang (14) auf der Fördervorrichtung liegt, zumindest 0°, insbesondere zumindest 1°, beträgt.

3.    Gummistrang-Herstellanlage (10) nach einem der vorstehenden Ansprüche, **dadurch gekennzeichnet, dass** der Messarm (18) oder der Drehpunkt des Messarms (18) oberhalb oder unterhalb der Fördervorrichtung angeordnet ist.

**4.** Gummistrang-Herstellanlage (10) nach einem der vorstehenden Ansprüche, **dadurch gekennzeichnet, dass** der Messarm (18) in einer im Wesentlichen vertikalen Richtung zur Fördervorrichtung oder Förderrichtung angeordnet ist.

**5.** Gummistrang-Herstellanlage (10) nach einem der vorstehenden Ansprüche, **dadurch gekennzeichnet, dass** der Messarm (18) über der Fördervorrichtung in einem Winkel zwischen 45° bis 90°, insbesondere im Wesentlichen 90°, bezogen auf eine Förderrichtung, angeordnet ist.

**6.** Gummistrang-Herstellanlage (10) nach einem der vorstehenden Ansprüche, **dadurch gekennzeichnet, dass** die Drehachse (D) so angeordnet ist, dass der Schwenkwinkel $(\alpha)$, wenn kein Gummistrang (14) auf der Fördervorrichtung liegt, höchstens 20°, insbesondere höchstens 10°, beträgt.

**7.** Gummistrang-Herstellanlage (10) nach einem der vorstehenden Ansprüche, **dadurch gekennzeichnet, dass**

    - die Gummistrang-Herstellvorrichtung (12) zum Herstellen eines Gummistrangs (14) mit einer vorgegebenen Strangdicke $(d_{14})$ ausgebildet ist und
    - ein Abstand der Drehachse (D) von einer Oberfläche der Fördervorrichtung (26, 32) zumindest das Dreifache, insbesondere zumindest das Fünffache, der Strangdicke $(d_{14})$ beträgt.

**8.** Gummistrang-Herstellanlage (10) nach einem der vorstehenden Ansprüche, **dadurch gekennzeichnet, dass** eine Länge (L) des Messarms (18) so gewählt ist und die Drehachse (D) so angeordnet ist, dass der Schwenkwinkel $(\alpha)$ bei einer Strangdicke $(d_{14})$ von 2 Millimeter zumindest 7° beträgt.

**9.** Gummistrang-Herstellanlage (10) nach einem der vorstehenden Ansprüche, **gekennzeichnet durch**

    - eine Kühlstrecke (44), die

        eine erste Teilstrecke (30), die eine erste Fördervorrichtung (26) und eine erste Kühlvorrichtung (28) aufweist, und
        eine zweite Teilstrecke (36), die eine zweite Fördervorrichtung (32) und eine zweite Kühlvorrichtung (34) aufweist,

    - wobei der Messarm (18) in der Kühlstrecke (44) angeordnet ist.

**10.** Gummistrang-Herstellanlage (10) nach Anspruch 9, **gekennzeichnet durch** einen Tänzer (38), der zwischen der ersten Teilstrecke (30) und der zweiten Teilstrecke (36) angeordnet ist.

**11.** Gummistrang-Herstellanlage (10) nach einem der vorstehenden Ansprüche, **gekennzeichnet durch** eine Auswerteeinheit (42), die eingerichtet ist zum automatischen

    - Messen des Schwenkwinkels $(\alpha)$ und
    - Berechnen der Strangdicke $(d_{14})$ aus dem Schwenkwinkel $(\alpha)$.

**12.** Gummistrang-Herstellanlage (10) nach einem der vorstehenden Ansprüche, **dadurch gekennzeichnet, dass**

    - die Gummistrang-Herstellvorrichtung (12) zum Herstellen eines Gummistrangs (14) mit einer vorgegebenen Strangbreite ausgebildet ist und
    - der Messarm (18) als Messklappe ausgebildet ist, die eine Messklappenbreite hat, die zumindest einem Viertel, insbesondere einem Drittel oder der Hälfte, der Strangbreite entspricht.

**13.** Gummistrang-Herstellanlage (10) nach einem der vorstehenden Ansprüche, **gekennzeichnet durch**

    - eine Abblasvorrichtung (48), die angeordnet ist zum Abblasen von Wassertropfen (50.1, 50.2) in einem Abblasbereich (B) auf dem Gummistrang (14),
    - wobei die Abblasvorrichtung (48) zumindest eine Abblasdüse (52) und eine Höhenverstellvorrichtung (54) aufweist,
    - wobei der Messarm (18') angeordnet ist zum Messen der Strangdicke $(d_{14,B})$ des Gummistrangs (14) im Abblasbereich (B) und
    - wobei die Höhenverstellvorrichtung (48) eingerichtet ist zum automatischen Anpassen einer Position der zumindest einen Abblasdüse (52) an die Strangdicke $(d_{14})$.

**14.** Gummistrang-Herstellanlage (10) nach einem der vorstehenden Ansprüche, **dadurch gekennzeichnet, dass** der Schwenkwinkel $(\alpha)$ so gemessen ist, dass er sich vergrößert, wenn ein freies Ende (20) des Messarms (18) sich in die gleiche Richtung bewegt wie der Gummistrang (14).

**Claims**

**1.** A rubber strand production installation (10) with

    (a) a rubber strand production device (12) for producing a rubber strand (14) and
    (b) a conveying device (26), in particular a conveyor belt, for conveying the rubber strand (14) and

(c) a thickness detection device (16) for detecting a strand thickness (d14) of the rubber strand (14), wherein the thickness detection device (16) has a measuring arm (18), which is pivotably arranged and the pivot angle ($\alpha$) of which changes as a function of the strand thickness (d14), **characterized in that**

the thickness detection device (16) comprises a pivot angle sensor (46),
the measuring arm (18) is rotatably mounted on a rotation axis (D) and
the shortest distance between the rotation axis (D) and the conveying device corresponds substantially to a length (L) of the measuring arm (18).

2. The rubber strand production installation (10) according to Claim 1, **characterized in that**

(a) the pivot angle ($\alpha$) is measured as an angle deviation from the shortest connecting line between the rotation axis (D) and the conveying device, wherein the pivot angle ($\alpha$) is all the greater, the greater the strand thickness (d14) of the rubber strand (14), and
(b) wherein the rotation axis (D) is arranged so that the pivot angle ($\alpha$), when no rubber strand (14) is lying on the conveying device, is at least 0°, in particular at least 1°.

3. The rubber strand production installation (10) according to one of the preceding claims, **characterized in that** the measuring arm (18) or the rotation point of the measuring arm (18) is arranged above or below the conveying device.

4. The rubber strand production installation (10) according to one of the preceding claims, **characterized in that** the measuring arm (18) is arranged in a substantially vertical direction to the conveying device or conveying direction.

5. The rubber strand production installation (10) according to one of the preceding claims, **characterized in that** the measuring arm (18) is arranged over the conveying device in an angle of between 45° to 90°, in particular substantially 90°, in relation to a conveying direction.

6. The rubber strand production installation (10) according to one of the preceding claims, **characterized in that** the rotation axis (D) is arranged so that the pivot angle ($\alpha$), when no rubber strand (14) is lying on the conveying device, is a maximum of 20°, in particular a maximum of 10°.

7. The rubber strand production installation (10) according to one of the preceding claims,

**characterized in that**

- the rubber strand production device (12) is designed for producing a rubber strand (14) with a predetermined strand thickness ($d_{14}$) and
- a distance of the rotation axis (D) from a surface of the conveying device (26, 32) is at least three times, in particular at least five times, the strand thickness ($d_{14}$).

8. The rubber strand production installation (10) according to one of the preceding claims, **characterized in that** a length (L) of the measuring arm (18) is selected so that, and the rotation axis (D) is arranged so that, the pivot angle ($\alpha$), at a strand thickness ($d_{14}$) of 2 millimetres, is at least 7°.

9. The rubber strand production installation (10) according to one of the preceding claims, **characterized by**

- a cooling section (44), which

has a first partial section (30), which has a first conveying device (26) and a first cooling device (28), and
a second partial section (36), which has a second conveying device (32) and a second cooling device (34),

- wherein the measuring arm (18) is arranged in the cooling section (44).

10. The rubber strand production installation (10) according to Claim 9, **characterized by** a dancer (38), which is arranged between the first partial section (30) and the second partial section (36).

11. The rubber strand production installation (10) according to one of the preceding claims, **characterized by** an evaluation unit (42), which is arranged for automatic

- measuring of the pivot angle ($\alpha$) and
- calculating of the strand thickness ($d_{14}$) from the pivot angle ($\alpha$).

12. The rubber strand production installation (10) according to one of the preceding claims, **characterized in that**

- the rubber strand production device (12) is designed for producing a rubber strand (14) with a predetermined strand width and
- the measuring arm (18) is embodied as a measuring flap, which has a measuring flap width which corresponds to at least a quarter, in particular a third or half of the strand width.

**13.** The rubber strand production installation (10) according to one of the preceding claims, **characterized by**

- a blowing device (48), which is arranged for blowing water drops (50.1, 50.2) in a blowing region (B) on the rubber strand (14),
- wherein the blowing device (48) has at least one blowing nozzle (52) and a height-adjustment device (54),
- wherein the measuring arm (18') is arranged for measuring the strand thickness ($d_{14,B}$) of the rubber strand (14) in the blowing region (B) and
- wherein the height-adjustment device (48) is arranged for the automatic adapting of a position of the at least one blowing nozzle (52) to the strand thickness ($d_{14}$).

**14.** The rubber strand production installation (10) according to one of the preceding claims, **characterized in that** the pivot angle ($\alpha$) is dimensioned such that it increases when a free end (20) of the measuring arm (18) moves in the same direction as the rubber strand (14).

**Revendications**

**1.** Installation de fabrication de fil de caoutchouc (10) comprenant

(a) un dispositif de fabrication de fil de caoutchouc (12) pour fabriquer un fil de caoutchouc (14) et
(b) un dispositif de transport (26), en particulier une bande de transport, pour transporter le fil de caoutchouc (14) et
(c) un dispositif pour la mesure d'épaisseur (16) pour détecter une épaisseur de fil ($d_{14}$) du fil de caoutchouc (14), dans lequel le dispositif pour la mesure d'épaisseur (16) présente un bras de mesure (18) qui est disposé pivotant et dont l'angle de pivotement ($\alpha$) se modifie en fonction de l'épaisseur de fil ($d_{14}$), **caractérisée en ce que** le dispositif pour la mesure d'épaisseur (16) comprend un capteur d'angle d'épaisseur (46), le bras de mesure (18) est disposé rotatif sur un pivot (D) et la distance la plus courte entre le pivot (D) et le dispositif de transport correspond essentiellement à une longueur (L) du bras de mesure (18).

**2.** Installation de fabrication de fil de caoutchouc (10) selon la revendication 1, **caractérisée en ce que**

(a) l'angle de pivotement ($\alpha$) est mesuré en tant qu'écart angulaire de la ligne de liaison la plus courte entre le pivot (D) et le dispositif de transport, dans lequel l'angle de pivotement ($\alpha$) est d'autant plus grand que l'épaisseur de fil ($d_{14}$) du fil de caoutchouc (14) est grande, et
(b) dans lequel le pivot (D) est ainsi disposé que l'angle de pivotement ($\alpha$), lorsque aucun fil de caoutchouc (14) ne repose sur le dispositif de transport, fait au moins 0°, en particulier au moins 1°.

**3.** Installation de fabrication de fil de caoutchouc (10) selon l'une des revendications précédentes, **caractérisée en ce que** le bras de mesure (18) ou le pivot du bras de mesure (18) est placé au-dessus ou en-dessous du dispositif de transport.

**4.** Installation de fabrication de fil de caoutchouc (10) selon l'une des revendications précédentes, **caractérisée en ce que** le bras de mesure (18) est disposé dans un sens essentiellement vertical par rapport au dispositif de transport ou au sens de transport.

**5.** Installation de fabrication de fil de caoutchouc (10) selon l'une des revendications précédentes, **caractérisée en ce que** le bras de mesure (18) est disposé au-dessus du dispositif de transport dans un angle entre 45° et 90°, en particulier essentiellement de 90°, rapporté à un sens de transport.

**6.** Installation de fabrication de fil de caoutchouc (10) selon l'une des revendications précédentes, **caractérisée en ce que** le pivot (D) est ainsi disposé que l'angle de pivotement ($\alpha$) ; lorsque aucun fil de caoutchouc (14) ne repose sur le dispositif de transport, fait au plus 20°, en particulier au plus 10°.

**7.** Installation de fabrication de fil de caoutchouc (10) selon l'une des revendications précédentes, **caractérisée en ce que**

- le dispositif de fabrication de fil de caoutchouc (12) est conçu pour fabriquer un fil de caoutchouc (14) avec une épaisseur de fil ($d_{14}$) prédéfinie et
- un écart du pivot (D) depuis une surface du dispositif de transport (26, 32) fait au moins trois fois, en particulier au moins cinq fois l'épaisseur de fil ($d_{14}$).

**8.** Installation de fabrication de fil de caoutchouc (10) selon l'une des revendications précédentes, **caractérisée en ce qu'**une longueur (L) du bras de mesure (18) est ainsi sélectionnée et le pivot (D) ainsi disposé que l'angle de pivotement ($\alpha$) fait au moins 7° pour une épaisseur de fil ($d_{14}$) de 2 millimètres.

**9.** Installation de fabrication de fil de caoutchouc (10) selon l'une des revendications précédentes, **caractérisée par**

- un trajet de refroidissement (44) qui

présente un premier trajet partiel (30), le premier dispositif de transport (26) et un premier dispositif de refroidissement (28), et

présente un deuxième trajet partiel (36), le deuxième dispositif de transport (32) et un deuxième dispositif de refroidissement (34),

- dans lequel le bras de mesure (18) est disposé dans le trajet de refroidissement (44).

10. Installation de fabrication de fil de caoutchouc (10) selon la revendication 9, **caractérisée par** un rouleau libre (38) qui est disposé entre le premier trajet partiel (30) et le deuxième trajet partiel (36).

11. Installation de fabrication de fil de caoutchouc (10) selon l'une des revendications précédentes, **caractérisée par** une unité d'évaluation (42) qui est conçue pour

- mesurer l'angle de pivotement ($\alpha$) et
- calculer l'épaisseur de fil ($d_{14}$) à partir de l'angle de pivotement ($\alpha$),

de façon automatique.

12. Installation de fabrication de fil de caoutchouc (10) selon l'une des revendications précédentes, **caractérisée en ce que**

- le dispositif de fabrication de fil de caoutchouc (12) est conçu pour fabriquer un fil de caoutchouc (14) avec une largeur de fil prédéfinie et
- le bras de mesure (18) est conçu en tant que volet de mesure qui a une largeur de volet de mesure qui correspond au moins à un quart, en particulier un tiers ou la moitié de la largeur de fil.

13. Installation de fabrication de fil de caoutchouc (10) selon l'une des revendications précédentes, **caractérisée par**

- un dispositif de soufflage (48) qui est disposé pour souffler des gouttes d'eau (50.1, 50.2) dans une zone de soufflage (B) sur le fil de caoutchouc (14),
- dans lequel le dispositif de soufflage (48) présente au moins une buse de soufflage (52) et un dispositif de réglage en hauteur (54),
- dans lequel le bras de mesure (18') est disposé pour mesurer l'épaisseur de fil ($d_{14,\,B}$) du fil de caoutchouc (14) dans la zone de soufflage (B) et
- dans lequel le dispositif de réglage en hauteur (48) est conçu pour adapter automatiquement une position de l'au moins une buse de soufflage (52) à l'épaisseur de fil ($d_{14}$).

14. Installation de fabrication de fil de caoutchouc (10) selon l'une des revendications précédentes, **caractérisée en ce que** l'angle de pivotement ($\alpha$) est ainsi mesuré qu'il s'agrandit lorsqu'une extrémité libre (20) du bras de mesure (18) se déplace dans le même sens que le fil de caoutchouc (14).

$$\cos \alpha = \frac{L - d_{14}}{L}$$

Fig. 1

EP 3 208 067 B1

**IN DER BESCHREIBUNG AUFGEFÜHRTE DOKUMENTE**

**In der Beschreibung aufgeführte Patentdokumente**

- US 2566854 A
- US 3892043 A